# EUROPÄISCHE PATENTANMELDUNG

(11) **EP 3 420 823 A1**
(43) Veröffentlichungstag der Anmeldung: **02.01.2019**
(21) Anmeldenummer: 17177895.4
(22) Anmeldetag: 26.06.2017
(51) Int. Cl.: A23F 3/16, A23F 5/24, A23L 2/385, A23L 2/54, A23F 5/10, A23F 5/14

(54) **HALTBARER COLD BREW**

(71) Anmelder: Authentic Nutrients GmbH, 22529 Hamburg (DE)
(72) Erfinder: Schulz, Norbert, 20251 Hamburg (DE)
(74) Vertreter: Raffay & Fleck

(57) **Zusammenfassung**

Die Erfindung betrifft die Haltbarmachung von cold brews, cold brews und deren Herstellung. Kalte Aufgüsse zur Zubereitung von Getränken, insbesondere von Kaffee und/oder Tee, sogenannte cold brews, und derartige Getränke sind im Stand der Technik zahlreich bekannt. Allerdings gestaltet sich die Haltbarkeit der Aufgüsse und/oder Getränke, insbesondere auf Basis von Kaffee problematisch, wenn die Getränke nicht gekühlt werden, insbesondere nicht bei Temperaturen von unter 15°C, insbesondere von unter 10°C, gekühlt gelagert werden.

Aufgabe ist es, ein Verfahren zur Haltbarmachung, eine Verwendung von Zucker, Säure und/oder Karbonisierung zur Haltbarmachung, ein Verfahren zur Herstellung sowie ein Getränkekonzentrat und ein Getränk auf Basis von kalten Aufgüssen von Tee und/oder Kaffee anzugeben, die auch ungekühlt für mindestens 3 Monate, insbesondere mindestens 6 Monate, besonders bevorzugt mindestens 12 Monate, haltbar sind. Dies kann überraschend durch Zugabe von Zucker und/oder pH-Wert-Senkung durch Zugabe von Säure, insbesondere Karbonisierung, in den beanspruchten Wertebereichen, Mengen und/oder Konzentrationen erreicht werden.

## Beschreibung

Die Erfindung betrifft die Haltbarmachung von cold brews, cold brews und deren Herstellung.

Kalte Aufgüsse zur Zubereitung von Getränken, insbesondere von Kaffee und/oder Tee, sogenannte cold brews, und derartige Getränke sind im Stand der Technik zahlreich bekannt. Allerdings gestaltet sich die Haltbarkeit der Aufgüsse und/oder Getränke, insbesondere auf Basis von Kaffee problematisch, wenn die Getränke nicht gekühlt werden, insbesondere nicht bei Temperaturen von unter 15°C, insbesondere von unter 10°C, gekühlt gelagert werden.

Aufgabe ist es, ein Verfahren zur Haltbarmachung, eine Verwendung von Zucker, Säure und/oder Karbonisierung zur Haltbarmachung, ein Verfahren zur Herstellung sowie ein Getränkekonzentrat und ein Getränk auf Basis von kalten Aufgüssen von Tee und/oder Kaffee anzugeben, die auch ungekühlt für mindestens 3 Monate, insbesondere mindestens 6 Monate, besonders bevorzugt mindestens 12 Monate, haltbar sind. Dies kann überraschend durch Zugabe von Zucker und/oder pH-Wert-Senkung durch Zugabe von Säure, insbesondere Karbonisierung, in den beanspruchten Wertebereichen, Mengen und/oder Konzentrationen erreicht werden. Dies ist insbesondere für kalte Aufgüsse von Kaffee überraschend, die bisher ungekühlt nicht länger als 2 Monate haltbar sind. Gerade die Kombination von Zugabe von Zucker und pH-Wert-Senkung, insbesondere durch Karbonisierung, erreicht einen synergistischen Effekt, der die einfache, kostengünstige und Inhaltsstoffe schonende Haltbarmachung für eine Haltbarkeit von mindestens 12 Monaten gewährleisten kann. Insbesondere durch die pH-Wert-Senkung zumindest auch, insbesondere nur durch Karbonisierung, kann geschmacklich weitgehend neutral eine Haltbarmachung erreicht werden. Durch die Erfindung wird es erstmalig möglich, Getränke auf Basis kalter Aufgüsse, insbesondere von Kaffee, ungekühlt im Lebensmitteleinzelhandel anzubieten.

Darüber hinaus bewirkt der Einsatz von Zucker die Konservierung des ursprünglichen Kaffeearomas, dass ohne dessen Einsatz sehr schnell verloren ginge.

Gelöst wird die Aufgabe durch ein Verfahren zur Haltbarmachung nach Anspruch 1, eine Verwendung nach Anspruch 4, ein Verfahren zur Herstellung eines Getränkekonzentrats und/oder Getränks nach Anspruch 6 sowie ein Getränkekonzentrat nach Anspruch 8 und ein Getränk nach Anspruch 9. Die abhängigen Ansprüche geben vorteilhafte Weiterbildungen an.

Mit dem Verfahren zur Haltbarmachung lassen sich bekannte Getränke und Getränkekonzentrats haltbar machen. Bekannte Rezepturen können verwendet und durch das Verfahren ergänzt bzw. haltbar gemacht werden.

Unter einem Getränkekonzentrat ist eine Flüssigkeit zu verstehen, die zumindest im mit Wasser verdünnten Zustand verzehrbar ist.

Sofern im Rahmen dieser Erfindung Kaffeebohnen verwendet werden, handelt es sich insbesondere um milde Kaffeebohnen. Sofern im Rahmen dieser Erfindung aus Kaffeebohnen hergestellte Getränke verwendet oder beansprucht werden, handelt es sich insbesondere um solche, die unter Verwendung milder Kaffeebohnen gewonnen wurden.

Unter kalt wird insbesondere eine Temperatur < = 45°C, insbesondere < = 42°C, verstanden. Kaltes Wasser weist somit insbesondere eine Temperatur < = 45°C, insbesondere < = 42°C, auf. Ein kaltes Aufgießen geschieht somit durchgehend bei Temperaturen < = 45°C, insbesondere < = 42°C,.

Karbonisieren kann generell durch Einleiten von CO₂ und/oder durch Verdünnen des Filtrats, Getränks und/oder Getränkekonzentrats mit karbonisierter Flüssigkeit durchgeführt werden.

Mit besonderem Vorteil ist die Verwendung eine Verwendung zur Haltbarmachung eines kalt aufgegossenem Getränks oder Getränkekonzentrats ohne Konservierungsmittel. Insbesondere ist das Verfahren zur Haltbarmachung eines kalt aufgegossenem Getränks oder Getränkekonzentrats ein Verfahren zur Haltbarmachung eines kalt aufgegossenem Getränks oder Getränkekonzentrats ohne Konservierungsstoff und wird insbesondere ein konservierungsmittelfreies kalt aufgegossenem Getränk oder Getränkekonzentrat bereitgestellt. Mit besonderem Vorteil ist das Verfahren zur Herstellung eines kalt aufgegossen Getränks oder Getränkekonzentrats ein Verfahren zur Herstellung eines konservierungsmittelfreien kalt aufgegossen Getränks oder Getränkekonzentrats.

Unter konservierungsmittelfrei wird insbesondere das nicht Zusetzten von und/oder die Freiheit von Zusatzstoffen E200 bis E299 und E1105 gemäß der VERORDNUNG (EU) Nr. 1129/2011 verstanden.

Mit besonderem Vorteil ist das kalt aufgegossene Getränkekonzentrat ein konservierungsmittelfreies Getränkekonzentrat. Mit besonderem Vorteil ist das kalt aufgegossene Getränk ein konservierungsmittelfreies Getränk. Insbesondere ist das Verfahren zur Haltbarmachung eines kalt aufgegossenem Getränks oder Getränkekonzentrats ein Verfahren zur Haltbarmachung eines kalt aufgegossenem konservierungsmittelfreies Getränks oder Getränkekonzentrats.

Im Rahmen dieser Erfindung wird als Zucker insbesondere Saccharose, insbesondere Rohrzucker, Glucose, Maltose, Galaktose, Laktose und/oder Fructose verwendet oder in dem Getränk oder Getränkekonzentrat beinhaltet.

Das Getränk ist insbesondere ein in einer verschlossenes Flasche befindliches Getränk. Mit besonderem Vorteil beinhaltet das Verfahren zur Herstellung eines kalt aufgegossen Getränks oder Getränkekonzentrats das Abfüllen des Getränks oder Getränkekonzentrats in eine Flasche und das Verschließen der Flasche. Insbesondere beinhaltet das Verfahren zur Haltbarmachung eines kalt aufgegossenem Getränks oder Getränkekonzentrats das Abfüllen des Getränks oder Getränkekonzentrats in eine Flasche und das Verschließen der Flasche.

Das Getränk und das Getränkekonzentrat beinhaltet insbesondere ausschließlich gefilterten kalten Kaffeeaufguss und/oder kalten Teeaufguss und die anspruchsgemäßen Stoffe sowie Aromen und/oder Fruchtsaft.

Das Getränkekonzentrat, das Filtrat und/oder der Aufguss kann durch Wasserentzug konzentriert werden. Hierfür wird ein besonders schonendes kaltes Konzentrationsverfahren mittels Umkehrosmose angewendet.

Das wasserentzogene Konzentrat oder eine darauf basierende Zubereitung kann transportiert und/oder mit Wasser verdünnt werden.

Durch Pasteurisierung, vor der Abfüllung, kann Cold Brew haltbar gemacht werden. Alternativ kann die Haltbarkeit durch Schockfrostung verlängert werden. Insbesondere die Pasteurisierung ist jedoch aufwendig und den Inhaltstoffen abträglich.

Mit besonderem Vorteil ist die Verwendung eine Verwendung zur Haltbarmachung eines nicht-pasteurisierten und/oder nicht schockgefrosteten kalt aufgegossenem Getränks oder Getränkekonzentrats. Insbesondere ist das Verfahren zur Haltbarmachung eines kalt aufgegossenem Getränks oder Getränkekonzentrats ein Verfahren zur Haltbarmachung eines kalt aufgegossenen nicht-pasteurisierten und/oder nicht schockgefrosteten Getränks oder Getränkekonzentrats und wird insbesondere ein nicht-pasteurisiertes und/oder nicht schockgefrostetes kalt aufgegossenem Getränk oder Getränkekonzentrat bereitgestellt. Mit besonderem Vorteil ist das Verfahren zur Herstellung eines kalt aufgegossen Getränks oder Getränkekonzentrats ein Verfahren zur Herstellung eines nicht-pasteurisierten und/oder nicht schockgefrosteten kalt aufgegossen Getränks oder Getränkekonzentrats. Mit besonderem Vorteil ist das kalt aufgegossene Getränkekonzentrat ein ein nicht-pasteurisiertes und/oder nicht schockgefrostetes Getränkekonzentrat. Mit besonderem Vorteil ist das kalt aufgegossene Getränk ein nicht-pasteurisiertes und/oder nicht schockgefrostetes Getränk.

Im Rahmen des Verfahrens für die Herstellung können die Schritte nach b., c., d. und andere, beispielsweise nach Anspruch 7, auch in anderen Reihenfolgen durchgeführt werden. Besonders bevorzug wird eine Verfahrensführung in der Reihenfolge a., b, Anspruch 7, c., d. oder a., b, c., Anspruch 7, d..

Dabei kann das Zwischenerzeugnis nach der Durchführung von Schritt a, b und c besonders gut gelagert und transportiert werden. Auf Grund der hohen Zuckerkonzentration ist hier eine besonders gute Lagerungsfähigkeit und Aromastabilität auch ohne pH-Wert Absenkung gegeben. Auch ist das Volumen gering und kann auf einfache Weise ein Getränk erzeugt werden, auch ein solches mit vergleichsweise geringer Zuckerkonzentration von 4 bis 12 Volumen% im Endprodukt, dem Getränk.

Die Zugabe von Flüssigkeit kann auch durch die Zugabe von Wassereis erfolgen, beispielsweise durch Aufguss auf Eis, bei dem die zum Aufgießen verwendete Flüssigkeit nach dem Kontakt mit dem Kaffee und/oder Tee mit Wassereis in Kontakt gebracht wird.

Generell wird eine Filtrierung mit einem Filter mit einer nominalen Porengröße und/oder Cutt-off Porengröße von 0,08 bis 0,2 *µ*m, insbesondere von 0,1*µ*m bis 0,13*µ*m, bevorzugt bzw. ein mit einem solchen Filter filtrierte Flüssigkeit, Getränk und/oder Getränkekonzentrat.

## Patentansprüche

1. Verfahren zur Haltbarmachung eines kalt aufgegossenem Getränks oder Getränkekonzentrats beinhaltend:
a. Bereitstellen eines kalt aufgegossenem Getränks oder Getränkekonzentrats, insbesondere beinhaltend kalt aufgegossenem Kaffee und/oder Tee,
b. Hinzugeben von Zucker bis eine Volumenkonzentration des Zuckers von mindestens 4 Volumen%, insbesondere mindestens 5 Volumen %, insbesondere maximal 16 Volumen%, des kalt gebrühten Getränks oder 60 Volumen%, insbesondere mindestens 65%, insbesondere maximal 80 Volumen %, des Getränkekonzentrats erreicht ist oder Hinzugeben von Zucker, aufweisend ein Volumen von 4 Volumen%, insbesondere mindestens 5 Volumen%, insbesondere maximal 16 Volumen%, des kalt gebrühten Getränks oder 60 Volumen%, insbesondere mindestens 65 Volumen%, insbesondere maximal 80 Volumen%, Getränkekonzentrats und/oder Absenkung des pH-Wertes des kalt gebrühten Getränks oder Getränkekonzentrats, insbesondere durch Karbonisierung und/oder Zugabe von Fruchtsäure.

2. Verfahren nach Anspruch 1, wobei mindestens 3g, insbesondere 4 bis 6g, Kohlensäure pro Liter Getränk oder Getränkekonzentrat eingebracht werden und/oder der ph-Wert auf einen Wert von maximal 5,5 insbesondere auf unter 5 abgesenkt wird.

3. Verfahren nach einem der vorstehenden Ansprüche, wobei das kalt aufgegossen Getränk oder Getränkekonzentrat, soweit frei von Partikeln ist, wie diese durch einen Filter mit nominaler Größe und/oder Cut-off Größe von maximal 0,2*µ*m, insbesondere maximal 0,13*µ*m, zurück gehalten werden oder das Verfahren das Filtrieren mit einen Filter mit nominaler Größe und/oder Cut-off Größe von maximal 0,2*µ*m, insbesondere maximal 0,13*µ*m und/oder insbesondere minimal 0,08*µ*m, beinhaltet.

4. Verwendung von Zucker und/oder pH-Wert-Absenkung, insbesondere durch Karbonisierung, zur Haltbarmachung eines kalt aufgegossenem Getränks oder Getränkekonzentrats, insbesondere beinhaltend kalt aufgegossenem Kaffee und/oder Tee, durch Hinzugeben von Zucker bis eine Volumenkonzentration des Zuckers von mindestens 4 Volumen%, insbesondere mindestens 5 Volumen%, insbesondere maximal 16 Volumen%,des kalt gebrühten Getränks oder 60 Volumen%, insbesondere mindestens 65%, insbesondere maximal 80 Volumen%, des Getränkekonzentrats erreicht ist oder Hinzugeben von Zucker, aufweisend ein Volumen von 4 Volumen%, insbesondere mindestens 5 Volumen%, insbesondere maximal 16 Volumen%,des kalt gebrühten Getränks oder 60 Volumen%, insbesondere mindestens 65%, insbesondere maximal 80 Volumen%, Getränkekonzentrats und/oder Karbonisieren des kalt gebrühten Getränks oder Getränkekonzentrats, insbesondere durch Karbonisierung und/oder Zugabe von Fruchtsäure.

5. Verwendung nach Anspruch 1, wobei mindestens 3g, insbesondere 4 bis 6g, Kohlensäure pro Liter Getränk oder Getränkekonzentrat eingebracht werden und/oder der ph-Wert auf einen Wert von maximal 5,5 insbesondere auf unter 5 abgesenkt wird.

6. Verfahren zur Herstellung eines kalt aufgegossen Getränks oder Konzentrats beinhaltend:
a. Aufgießen von gerösteten und gemahlenen Kaffeebohnen, insbesondere grob gemahlen, insbesondere mit einem Mahlgrad von 7-8 auf einer Skala von 1 -10 von fein bis grob, mit kalter Flüssigkeit, insbesondere Wasser aufweisend, insbesondere Wasser, insbesondere aufweisend eine Temperatur von kleiner gleich 45°C, insbesondere kleiner gleich 42°C, für mindestens 6, insbesondere 8 bis 16 Stunden, insbesondere mit 1 bis 3 gemahlenen Kaffeebohnen pro 100ml Flüssigkeit,
b. Filtrieren des Aufgusses, insbesondere mit einen Filter mit nominaler Größe und/oder Cut-off Größe von maximal 0,2*µ*m, insbesondere maximal 0,13*µ*m und/oder insbesondere minimal 0,08*µ*m,
c. Hinzugeben von mindestens 150 ml, insbesondere 180 - 300ml, Zucker pro 100 ml Filtrat.
d. Absenken des pH-Wertes durch Einbringen von mindestens 3g, insbesondere 4 bis 6g, Kohlensäure pro Liter Getränk oder Getränkekonzentrat und/oder und/oder auf maximal 5,5, insbesondere unter 5.

7. Verfahren nach Anspruch 6, wobei pro 2,5g des bei der Filtrierung erhaltenen Filtrats vor, nach und/oder bei Zugabe des Zuckers und/oder vor, nach und/oder bei Absenken des PH-Wertes 50 bis 200 ml Flüssigkeit, insbesondere Wasser, zugegeben werden.

8. Kalt aufgegossenes Getränkekonzentrat hergestellt durch kaltes Aufgießen geröstete und gemahlene Kaffeebohnen mit einer kalten Flüssigkeit und Ziehen lassen und anschließender Filtrierung, aufweisen eine Zuckerkonzentration, von mehr als 60 Volumen%, insbesondere mindestens 65 Volumen%, insbesondere maximal 80 Volumen%, und/oder aufweisend einen pH Wert von maximal 5,5, insbesondere von unter 5,5.

9. Kalt aufgegossenes Getränk hergestellt durch kaltes Aufgießen gerösteter und gemahlener Kaffeebohnen mit einer kalten Flüssigkeit und Ziehen lassen und anschließender Filtrierung aufweisen eine Zuckerkonzentration, insbesondere von mindestens 4 Volumen%, insbesondere mindestens 5 Volumen%, insbesondere maximal 16 Volumen%, und/oder aufweisend einen pH-Wert von maximal 5,5, insbesondere unter 5.
